# EUROPEAN PATENT APPLICATION

(11) **EP 4 773 564 A1**
(43) Date of publication of application: **08.07.2026**
(21) Application number: 24893062.0
(22) Date of filing: 08.10.2024
(51) Int. Cl.: H04L 27/26

(54) **SIGNAL PROCESSING METHOD AND APPARATUS, ELECTRONIC DEVICE, AND COMPUTER READABLE STORAGE MEDIUM**

(30) Priority: 21.11.2023 CN 202311571186
(71) Applicant: Sanechips Technology Co., Ltd., Shenzhen, Guangdong 518055 (CN)
(72) Inventor: ZHOU, Linglin, Shenzhen, Guangdong 518055 (CN); DENG, Bo, Shenzhen, Guangdong 518055 (CN); HUANG, Wei, Shenzhen, Guangdong 518055 (CN); ZHANG, Bin, Shenzhen, Guangdong 518055 (CN)
(74) Representative: Canzler & Bergmeier Patentanwälte Partnerschaft mbB
(86) International application number: PCT/CN2024/123418
(87) International publication number: WO 2025/107903

(57) **Abstract**

The present disclosure provides a signal processing method, a signal processing apparatus, an electronic device, and a computer readable storage medium. The signal processing method comprises: converting a target signal under a preset standard into symbol data, and caching the symbol data, wherein there is at least one preset standard; generating online a read address and a read enable corresponding to the symbol data; on the basis of the read address and the read enable, restoring the symbol data read from the cache into I-path and Q-path read data, and filtering the two paths of read data on the basis of channel types to obtain filtered data; optimizing the filtered data to obtain a target baseband signal; caching the target baseband signal; and reading the cache data on the basis of a set delay value, and then performing interface conversion and radio frequency (RF) processing.

## Description

### CROSS-REFERENCE TO RELATED APPLICATIONS

The present disclosure claims priority from Chinese patent application No. 202311571186.1 filed on November 21, 2023, the entirety of which is incorporated hereby by reference.

### TECHNICAL FIELD

The present disclosure relates to the field of core networks, and particularly relates to a signal processing method, a signal processing apparatus, an electronic device and a computer readable storage medium.

### BACKGROUND

With the development of the mobile communication technology, the non-standalone (NSA) networking implemented by long term evolution-advanced (LTEA) and new radio (NR) has become a widely applied mode in 5G (the 5th generation mobile communication technology) networking. A terminal device adopting the mode of NSA networking needs to support two standards, i.e., NR and LTEA, for performing an orthogonal frequency division multiplexing (OFDM) signal modulation.

For an OFDM modulated signal, to eliminate inter-symbol and inter-subcarrier interference in an OFDM modulation system, a cyclic prefix is typically inserted into a signal subjected to IFFT (inverse fast Fourier transform) as a guard interval, and windowing or filtering means are additionally desired to suppress out-of-band spectrum leakage and smooth inter-symbol phase discontinuity caused by the cyclic prefix.

### SUMMARY

In a first aspect, the present disclosure provides a signal processing method, including: converting a target signal under a preset standard into symbol data and buffering the symbol data in a buffer, the preset standard including at least one standard; generating a read address and a read enablement corresponding to the symbol data online in the buffer; restoring, based on the read address and the read enablement, the symbol data read from the buffer into two channels of read data in I-channel and Q-channel, and filtering the two channels of read data correspondingly based on channel types of the two channels of read data in I-channel and Q-channel to obtain filtered data; optimizing the filtered data to obtain a target baseband signal; buffering the target baseband signal; and reading buffered data based on a preset delay value, and then performing interface conversion and radio frequency (RF) processing on the read buffered data.

In a second aspect, the present disclosure further provides a signal processing apparatus, including: a first buffer module configured to convert a target signal under a preset standard into symbol data and buftering the symbol data in a buffer, the preset standard including at least one standard; a generation module configured to generate a read address and a read enablement corresponding to the symbol data online in the buffer; a filtering module configured to restore, based on the read address and the read enablement, the symbol data read from the buffer into two channels of read data in I-channel and Q-channel, and filter the two channels of read data correspondingly based on channel types of the two channels of read data in I-channel and Q-channel to obtain filtered data; an optimization module configured to optimize the filtered data to obtain a target baseband signal; a second buffer module configured to buffer the target baseband signal; and a processing module configured to read buffered data based on a preset delay value, and then perform interface conversion and radio frequency (RF) processing on the read buffered data.

In a third aspect, the present disclosure provides an electronic device, including: at least one processor; and a memory having at least one computer program stored thereon, the at least one computer program, when executed by the at least one processor, causes the at least one processor to implement the signal processing method described above.

In a fourth aspect, the present disclosure provides a computer readable storage medium having a computer program stored thereon, the computer program, when executed by a processor, causes the processor to implement the signal processing method described above.

### BRIEF DESCRIPTION OF DRAWINGS

In the drawings of the present disclosure:
FIG. 1 is a block diagram of an OFDM modulation system in the existing art according to the present disclosure;
FIG. 2 is a flowchart of a signal processing method according to the present disclosure;
FIG. 3 is a schematic control flow of a read address and a read enablement according to the present disclosure;
FIG. 4 is a schematic view of an HBF with 6 cascaded HBFs according to the present disclosure;
FIG. 5 is a schematic view of 12 cascaded FIR units according to the present disclosure;
FIG. 6 is a schematic diagram showing timing points of a first buffer module and a second buffer module according to the present disclosure;
FIG. 7 is a block diagram of a signal processing apparatus according to the present disclosure;
FIG. 8 is a schematic structural diagram of a signal processing apparatus according to the present disclosure;
FIG. 9 is a block diagram of an electronic device according to the present disclosure; and
FIG. 10 is a block diagram of a computer readable storage medium according to the present disclosure.

### DETAIL DESCRIPTION OF EMBODIMENTS

To improve understanding of the technical solutions of the present disclosure for those skilled in the art, the signal processing method, the signal processing apparatus, the electronic device, and the computer readable storage medium provided in the present disclosure will be described below in detail in conjunction with the accompanying drawings.

The present disclosure will be described more sufficiently below with reference to the accompanying drawings, but the illustrated implementations may be embodied in different forms. However, the present disclosure should not be construed as being limited to the implementations set forth herein. These implementations are provided so that the present disclosure will be more thorough and complete, and will fully convey the scope of the present disclosure to those skilled in the art.

The accompanying drawings are provided for further understanding the implementations of the present disclosure and constitute a part of the specification. Hereinafter, these drawings are intended to explain the present disclosure together with the detailed implementations, but should not be considered as a limitation to the present disclosure. The above and other features and advantages will become more apparent to those skilled in the art by describing the detailed implementations with reference to the accompanying drawings.

The present disclosure may be described with reference to plan and /or sectional views in idealized representations of the present disclosure. Accordingly, the example illustrations may be modified in accordance with the manufacturing process and/or the tolerance.

The implementations of the present disclosure and features thereof may be combined with each other without conflict.

The terminology used in the present disclosure is for the purpose of describing particular implementations only and is not intended to be limiting of the present disclosure. As used herein, the term "and/or" includes any and all combinations of one or more of the associated listed items. As used herein, the singular forms "a", "an" and "the" are intended to include the plural forms as well, unless the context clearly indicates otherwise. As used herein, the terms "comprise/include" and "consist of ..." specify the presence of the stated features, integers, steps, operations, elements, and /or components, but do not preclude the presence or addition of at least one another feature, integer, step, operation, element, component, and /or group thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The present disclosure is not limited to the implementations shown in the drawings, but includes modifications of configurations formed based on a manufacturing process. Thus, the regions illustrated in the figures have schematic properties, and the shapes of the regions shown in the figures illustrate specific shapes of regions of elements, but are not intended to be limiting.

With the development of the mobile communication technology, the non-standalone (NSA) networking implemented by long term evolution-advanced (LTEA), new radio (NR) has become a widely applied mode of 5G (the 5th generation mobile communication technology) networking. A terminal device adopting the mode of NSA networking needs to support two standards, i.e., NR and LTEA, for performing an orthogonal frequency division multiplexing (OFDM) signal modulation.

For an OFDM modulated signal, to eliminate inter-symbol and inter-subcarrier interference in an OFDM modulation system, a cyclic prefix is typically inserted into a signal subjected to IFFT (inverse fast Fourier transform) as a guard interval, and windowing or filtering means are additionally desired to suppress out-of-band spectrum leakage and smooth inter-symbol phase discontinuity caused by the cyclic prefix.

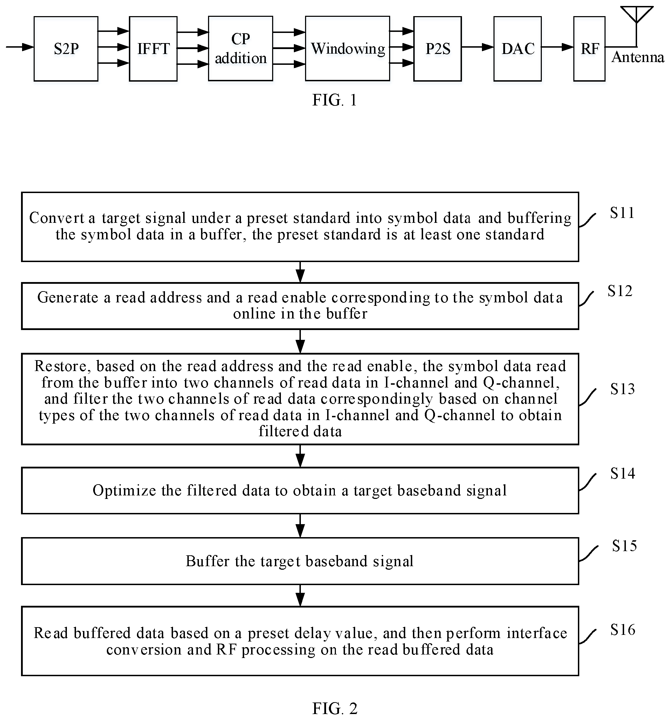

A block diagram of an existing OFDM modulation system in a communication system is as shown in FIG. 1, the OFDM modulation system performs parallel transmission of serial data through a plurality of orthogonal subcarriers which are mutually overlapped, and performs a modulation on an OFDM signal by IFFT, thereby achieving an excellent fading suppression capability and a high utilization rate of frequency band resources.

In view of the above background, the existing solution mainly has following three problems from 1 to 3.

1. A process of modulating an OFDM signal implemented by software is simple and highly flexible, but involves a large amount of data computation, which takes a long operation time and occupies a large amount of resources, thereby increasing the implementation cost of the product.

2. A process of modulating an OFDM signal implemented by hardware involves various scenes related to different standards, resulting in a complex control process hard to be unified, therefore, in most hardware implementations, processing flows for the standards are separately implemented to meet requirements, which results in each control being independent and convenient, but requires a larger area to be implemented, making it hard to reduce the cost of the device.

3. In a process of modulating an OFDM signal, a high-order filter is used for filtering to obtain good out-of-band performance, but the implementation of the high-order filter is very complex, which makes it hard to reduce the cost for a multi-standard terminal device, and since the filter will work for a long time, an improper design of the filter may introduce a higher power consumption and hinder an energy conservation of the device.

To overcome the problems, such as the process of modulating the OFDM signal being complex, and requiring a relatively large area to be implemented and the like, under multiple standards in the existing art, the present disclosure provides a signal processing method, for example, an OFDM modulated signal post-processing method, which can implement an OFDM modulated signal post-processing process in a current mainstream wireless communication system with a relatively low cost and a relatively low power consumption.

In the solution of the present disclosure, the preset standard includes at least one standard, and by processing the target signal under the preset standard, fused processing under standards such as NR and LTEA is implemented, thereby reducing the implementation cost and the power consumption of the system; by generating the read address and the read enablement corresponding to the symbol data online in the buffer, the synchronization of uplink signals is guaranteed; and by buffering the target baseband signal, it can be ensured that the uplink delay is the same (an absolute time) under all sampling rates, modulation and coding scheme (MCS) scheduling and bandwidth scenes, and a fine adjustment on the delay for each channel and carrier is facilitated.

The signal processing method provided by the present disclosure may be executed by any electronic device that is to execute similar signal processing, such as a terminal device or a server. The terminal device may include, but is not limited to, a vehicle-mounted device, a user equipment (UE), a mobile device, a computing device, a wearable device, and the like, including, for example, but not limited to a cellular phone, a cordless phone, a personal digital assistant (PDA), a portable computer, and the like. An unstructured supplementary service data notification transmission method may be implemented by a processor calling computer readable program instructions stored in a memory, or may be implemented by a server.

The signal processing method provided by the present disclosure may be applied to products related to various wireless communication systems, including but not limited to, the 4th generation mobile communication technology (4G), 5G, wireless fidelity (WiFi), NB-IoT (NR: new radio; IoT: internet of things), Vehicle To Everything (V2X), and the like.

The solution of the present disclosure may be used for an OFDM modulation apparatus which supports both NR and LTEA, or for an OFDM modulation under NR alone or LTEA alone, or the flows performed by the apparatus provided in the solution of the present disclosure may be spitted to implement a part of the solution for an OFDM demodulation apparatus.

The following provides a detailed description of the solution provided in the present disclosure.

The present disclosure provides a signal processing method, and as shown in FIG. 2, the method includes following operations S11 to S16.

At S11, converting a target signal under a preset standard into symbol data and buffering the symbol data in a buffer, the preset standard being at least one standard.

In the present disclosure, the preset standard may include, but is not limited to, at least one of new radio (NR) or long term evolution-advanced (LTEA). The target signal may include, but is not limited to, an orthogonal frequency division multiplexing (OFDM) modulated signal.

In some implementations of the present disclosure, converting the target signal under the preset standard into symbol data and buffering the symbol data in the buffer (i.e., S11) includes: performing inverse fast Fourier transform (IFFT) processing on an OFDM modulated signal to obtain the symbol data; and buffering the symbol data under different standards in a same first buffer module in a time division multiplexing mode, and in a Ping-Pong buffering manner.

In the signal processing method of the present disclosure, a first buffer module may be used to store the symbol data obtained by performing IFFT on the OFDM modulated signal under the NR or LTEA standard, and the first buffer module may be multiplexed under multiple standards. During the OFDM modulated signal being written into the first buffer module, for example, into a random access memory (RAM), two sets of RAMs may be used to perform a Ping-Pong storage symbol by symbol, to prepare for subsequent online windowing.

At S12, generating a read address and a read enablement corresponding to the symbol data online in the buffer.

In some implementations of the present disclosure, generating the read address and the read enablement corresponding to the symbol data online in the buffer (i.e., S12) includes: performing an addition of a cyclic prefix (CP) and an adjustment of a timing advance (TA) on the symbol data; and generating a read address and a read enablement corresponding to the symbol data subjected to the addition of the CP addition and the adjustment of the TA based on a control scene.

In the signal processing method of the present disclosure, a read address corresponding to the symbol data subjected to the addition of the CP and the adjustment of the TA under the NR or LTEA standard may be generated online, and a corresponding read enablement may be generated based on a preset read start time. During adding the CP, an adjustment value for adjusting the TA should be considered to keep uplink synchronization, and during considering the adjustment of the uplink TA, the hardware processing delay should be consistent in different control scenes (or scheduling scenes). According to the solution of the present disclosure, a transmission start time of the baseband signal can be adjusted in the second buffer module (which will be introduced later), and a read start time of the first buffer module can be flexibly adjusted depending on different control scenes under different standards, to match the transmission start time of the baseband signal, thereby reducing the RAM area cost of the second buffer module.

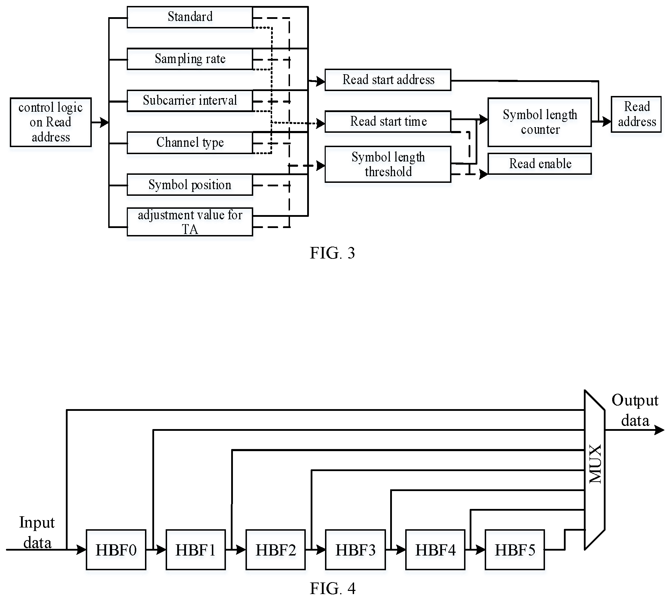

In some implementations of the present disclosure, as shown in FIG. 3, generating the read address and the read enablement corresponding to the symbol data subjected to the addition of the CP and the adjustment of the TA based on the control scene may include: acquiring scene parameters of the control scene, the scene parameters including, but not limited to, an address parameter, a time parameter, and a symbol length parameter; generating a read start address based on the address parameter, generating a read start time based on the time parameter, and generating a symbol length threshold based on the symbol length parameter; starting a preset symbol length counter based on the read start time and the symbol length threshold, and generating the read address based on the read start address and a count of the symbol length counter; and generating the read enablement based on the read start time and the symbol length threshold.

In some implementations of the present disclosure, as shown in FIG. 3, the address parameter may include, but is not limited to, at least one of the standard, a sampling rate, a subcarrier interval, a channel type, a symbol position or an adjustment value for adjusting the TA; the time parameter may include, but is not limited to, at least one of the standard, the sampling rate, the subcarrier interval or the channel type; the symbol length parameter may include, but is not limited to, at least one of the standard, the sampling rate, the subcarrier interval, the channel type, the symbol position or the adjustment value for adjusting the TA.

In the signal processing method of the present disclosure, during generating the read address and the read enablement, different parameters, such as different standards, sampling rates, channel types and adjustment values for adjusting the TA, may correspond to different results, and since various control scenes are involved, if an enumeration method is adopted, the control is complex and omissions or errors are prone to occur. Therefore, in the solution of the present disclosure, influences of various parameters on the read address and the read enablement are expressed by different variable factors, and the variable factors are combined to generate the read address and the read enablement, thereby significantly reducing the implementation complexity.

In the signal processing method of the present disclosure, according to the schematic control flow of a read address and a read enablement in FIG. 3, first, various parameters, such as a standard, a sampling rate, a subcarrier interval, a channel type, a symbol position, an adjustment value for adjusting the TA, and the like, for calculating the read address and the read enablement are acquired by a configuration of software; then, different variable factors (such as an address parameter, a time parameter, a symbol length parameter and the like) are obtained based on the influences of the various parameters on the read address and the read enablement, and are combined to correspondingly obtain the read start address, the read start time and the symbol length threshold; next, a symbol length counter is started to start an accumulation and generate the read enablement based on the read start time and the symbol length threshold; and finally, the read start address and the symbol length counter are combined to generate the read address of corresponding symbol data online.

At S13, restoring, based on the read address and the read enablement, the symbol data read from the buffer into two channels of read data in I-channel and Q-channel, and filtering the two channels of read data correspondingly based on channel types of the two channels of read data in I-channel and Q-channel to obtain filtered data.

In some implementations of the present disclosure, filtering the two channels of read data correspondingly based on channel types of the two channels of read data in I-channel and Q-channel to obtain filtered data (i.e., S13) may include: in response to the channel type is a physical random access channel (PRACH), performing upsampling filtering on the read data by cascaded low-order filters, each low-order filter being a filter having a filter order less than a preset order threshold; and in response to the channel type being not a PRACH, performing at least one of windowing or finite impulse response (FIR) filtering on the read data.

In the signal processing method of the present disclosure, data are sequentially and circularly read from the first buffer module based on the read address and the read enablement, and restored into two channels of data in I/Q channel to obtain two channels of read data, and different types of subsequent processing are selected depending on the channel types of the two channels of read data.

In the signal processing method of the present disclosure, if the channel type is the PRACH, upsampling filtering is performed on the data with cascaded low-order filters, and if the channel type is not the PRACH, windowing or finite impulse response (FIR) filtering is performed on the data. In another equivalent implementation, the symbol data, corresponding to the cyclic prefix to be added and the adjustment value for adjusting the TA, may be stored by a buffer in an offline manner, and then valid symbol data is concatenated. A defect of the implementation is that multiple buffer units are introduced and the design area is increased.

In some implementations of the present disclosure, performing upsampling filtering on the read data by the cascaded low-order filters includes: for a long code of the PRACH, performing IFFT based on an original number of sampling points in a PRACH sequence in the PRACH to obtain a transformed result; and upsampling the transformed result by the cascaded low-order filters to a number of sampling points corresponding to the long code for filtering.

In some implementations of the present disclosure, the low-order filter may include, but not limited to, a half band filter (HBF).

In some implementations of the present disclosure, upsampling filtering may be performed by cascaded HBFs for some PRACH scenes to generate PRACH preambles and suppress out-of-band leakage, and other PRACH scenes and non-PRACH scenes not to be subjected to upsampling are bypassed (directly pass without filtering).

In the signal processing method of the present disclosure, the long code of the PRACH has a relatively long preamble sequence (SEQ), and thus theoretically expects a relatively large number of IFFT points. For example, at a data sampling rate of 30.72 megahertz (MHz), a non-repeated SEQ length for PRACH formats 0 to 2 is 24576, and in this case, the number of IFFT points is 24576 in theory. To directly achieve the IFFT with such a large number of points (24576), a huge amount of resources will be consumed, and as the sampling rate increasing, the SEQ length will be correspondingly increased. To solve this problem, the present disclosure adopts a solution of performing the IFFT with a smaller number of points (e.g., 1536) first, and then upsampling to the corresponding number of points (24576) based on an IFFT result for later filtering.

In the present disclosure, for a scene in which a relatively high upsampling factor is to be achieved, the solution of the present disclosure adopts cascaded low-order filters, which can reduce the order of the filter to a great extent and reduce the power consumption. In a process of cascading, the solution of the present disclosure uses an upsampling factor of 2. Therefore, an HBF can be used, which can further save resources. In another equivalent implementation, FIR filtering may be performed after one upsampling operation is completed during data being read from the first buffer module, or may be performed after multiple upsampling operations, which but requires a higher filter order, a higher implementation cost and a higher power consumption.

Based on the above description, the signal processing method of the present disclosure may support upsampling by a factor of 2^{N} through N (N being a positive integer) cascaded HBFs, each stage of HBF supports bypass. In response to the number of cascaded stages being less than N, the cascaded HBFs to be used are preferentially enabled from front to back, and the remaining are bypassed. During upsampling being not performed, all HBFs are bypassed. The hardware structure of each stage of HBF is still kept consistent at different sampling rates, so as to support different upsampling factors flexibly. Taking six cascaded HBFs (including HBF0, HBF1, HBF2, HBF3, HBF4 and HBF5) as an example, it supports up to upsampling by a factor of 64, and corresponds to an implementation structure as shown in FIG. 4.

In some implementations of the present disclosure, a clock of the cascaded low-order filters includes two-stage gating. The two-stage gating may include: global gating for the cascaded low-order filters, and gating for each stage of low-order filter. A clock for each stage of low-order filter is started only upon the stage of low-order filter is enabled.

For example, two-stage clock gating is provided in the cascaded HBFs to reduce the power consumption, gating for the cascaded HBFs in entire is at a first stage, gating for each stage of HBF is at a second stage, and an actual operating clock (clk) is valid only upon the stage of HBF is enabled.

In some implementations of the present disclosure, each stage of low-order filter in the cascaded low-order filters adopts multiple phases.

For example, to save an area and the power consumption, a multi-phase implementation is adopted for each stage of HBF, and two phases may be preset in the solution of the present disclosure.

In some implementations of the present disclosure, before performing at least one of windowing or finite impulse response (FIR) filtering on the read data, the signal processing method may further include: setting each FIR unit in advance based on the number of multiply-accumulate operations within one sampling period at the highest data sampling rate; cascading a plurality of FIR units to obtain an FIR filter with a configurable order; and obtaining a target FIR filter with a corresponding order by controlling the number of enabled FIR units in the FIR filter, any target FIR filter with an achievable order is capable of being multiplexed.

In some implementations of the present disclosure, the out-of-band leakage of a transmitted signal may be suppressed by any one or two of windowing and FIR filtering.

In some implementations of the present disclosure, adjacent OFDM symbol data have a phase discontinuity due to the insertion of the CP therebetween, and there is a phase jump between symbols, so that windowing or filtering is desired to smooth a transition between symbol data and suppress the out-of-band leakage of the transmitted signal. At different data sampling rates, different window lengths and windowing bypass may be supported.

In some implementations of the present disclosure, the process of windowing mainly includes using a section of cosine-like function (-π to 0) to realize "gradually rising" of data, and using another section of cosine-like function (0 to π) to realize "gradually dropping" of data, thereby achieving a filtering effect.

In the signal processing method of the present disclosure, a solution including windowing and filtering is supported to reduce the order of the FIR filter. It can distinguish different frequency ranges and different sampling rates to support configurable filter orders, as well as filtering bypass.

In the signal processing method of the present disclosure, during implementing the filter, data is processed online, and the solution of the present disclosure can adopt a fixed operating clock frequency in different scenes to reduce the implementation cost, and perform a multiply-accumulate operation of the filter based on the number of operating clocks within 1Ts (i.e., one sampling period, corresponding to the actual sampling rate) at different sampling rates, with data shift being performed in the unit of Ts. To achieve a uniform hardware implementation for different data sampling rates, based on the number of multiply-accumulate operations which can be performed within 1Ts at the highest data sampling rate, the solution of the present disclosure establishes a FIR group as a filtering granularity (i.e., the FIR unit described above), and different numbers of FIR groups are called and cascaded for different orders to maximize the multiplexing of hardware resources, thereby facilitating a unified control, simplifying a control logic, and reducing an overall area of filtering part.

In some implementations of the present disclosure, a clock of each FIR filter includes two-stage gating. The two-stage gating includes: gating for the FIR filter, and gating for each FIR unit. A clock for a corresponding FIR unit is started only upon the FIR unit is enabled.

In the signal processing method of the present disclosure, to further reduce the system power consumption, two-stage gating is provided for the clock of the filtering part, gating for the FIR filter in entire is at a first stage, gating for each FIR group is at a second stage, a clock for a corresponding FIR group is started only upon the filtering granularity is enabled, and within the FIR group, shift and multiply-accumulate operations are configured to be executed only under an enable signal for pulling high the actual operating clock (clk), thereby significantly reducing the power consumption.

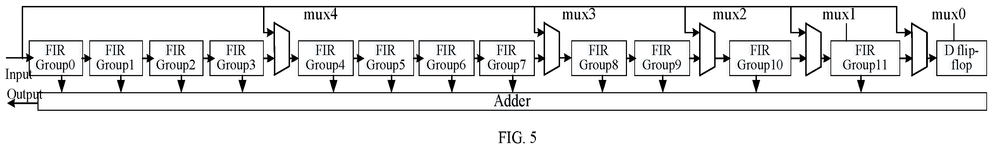

In the signal processing method of the present disclosure, different filter orders can be flexibly supported by one set of hardware structure to adapt to order expectations of different scenes. For example, a plurality of FIR groups are cascaded to implement FIR filtering, and a plurality of multiplexers (muxes) are used to call different numbers of FIR groups to adapt to different orders. For example, taking 12 FIR groups and 5 muxes as an example for explanation, that is, the FIR filter includes 12 FIR groups and 5 muxes, which corresponds to a cascaded implementation structure as shown in FIG. 5, the 12 FIR groups include FIR Group0, FIR Group1, FIR Group2, FIR Group3, FIR Group4, FIR Group5, FIR Group6, FIR Group7, FIR Group8, FIR Group9, FIR Group10, and FIR Group11, and the 5 muxes include mux0, mux1, mux2, mux3, and mux4. Here, mux0 may be coupled to a D flip-flop, and each FIR group may be coupled to an adder.

In the signal processing method of the present disclosure, to operate at the maximum order, the 12 FIR groups are enabled, and input data is filled from FIR Group0, and to operate at a low order, the cascaded FIR groups to be used are preferentially enabled from back to front, and the input data is filled from a first FIR group of the corresponding order by using the mux.

In some implementations of the present disclosure, performing FIR filtering on the read data may include: determining a filter order for the read data; and starting a target FIR filter with a corresponding order in the FIR filter based on the determined filter order to filter the read data.

In some implementations of the present disclosure, based on the FIR filter obtained, an order of the filter may be configured as desired to obtain a target FIR filter, and after the order is determined, data can be input simply from a first FIR group of a mux corresponding to the filter with a corresponding order.

In some implementations of the present disclosure, the filter order may be obtained from an input parameter related to the filter order.

At S14, optimizing the filtered data to obtain a target baseband signal.

In some implementations of the present disclosure, the optimizing may include, but is not limited to, at least one of: selectively performing power scaling-up and roll-off processing on successive filtered data; or compensating for a phase and a frequency of the filtered data.

In the signal processing method of the present disclosure, in addition to windowing, in order to suppress the out-of-band leakage of the transmitted signal, power scaling-up and roll-off processing may be supported at a head and a tail of a continuous transmission, i.e.,, a segment of data sample is scaled, so that an amplitude of the transmitted signal gradually increasing is formed at the head, and an amplitude of the transmitted signal gradually decreasing is formed at the tail.

In the signal processing method of the present disclosure, phase and frequency shifts occurring in the operation of the device can be compensated. The solution of the present disclosure can perform online compensation by calling multiple sets of coordinate rotation digital computer (CORDIC) units for parallel processing, thereby reducing the design complexity and the logic area.

In some implementations of the present disclosure, the power scaling-up and roll-off processing may be performed before compensating the phase and frequency.

At S15, buffering the target baseband signal.

In some implementations of the present disclosure, the generated target baseband signal (e.g., OFDM baseband signal) may be stored by a second buffer module.

Based on the first buffer module described above and the second buffer module, the solution of the present disclosure provides two buffer modules. The two buffer modules are mainly used to ensure that a receiving end can receive the corresponding signal in a fixed time window, with considering that the hardware processing delay should be consistent for different subcarrier intervals, different sampling rates and different scheduling schemes during the uplink TA being adjusted. However, during the target baseband signal being generated, the processing delay varies in different operations, and if the processing delay of each operation is fixed, each operation is to be controlled according to actual control scenes under different standards, leading to a complex hardware control logic and inconvenient transplantation. Therefore, in the solution of the present disclosure, a unified buffer module is used to adjust a read start time ① (adjusted by the first buffer module) and a transmission start time ② of the target baseband signal (adjusted by the second buffer module) in a post-processing flow of the OFDM modulated signal.

In the signal processing method of the present disclosure, the second buffer module guarantees that the uplink delay is the same (an absolute time) for each sampling rate, each MCS scheduling and each bandwidth scene, with considering that the delay for each channel or carrier may be fine-tuned.

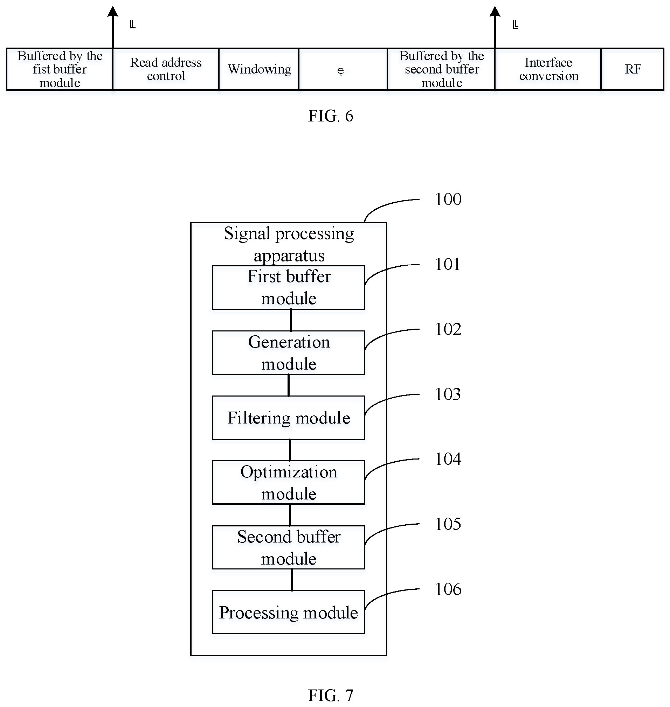

In the signal processing method of the present disclosure, FIG. 6 shows a schematic diagram showing timing points of two buffer modules (i.e., a first buffer module and a second buffer module). Since the processing delay prior to the first buffer module is unified by the read start time ①, a maximum time difference corresponding to a transmission time at the transmission start time ② is a processing delay in the flow subsequent to the read start time ①, and on the basis, a depth of the second buffer module can be obtained by adding a channel delay without buffering the data of the entire symbol length, thereby reducing the area of the buffer module. Furthermore, in a scene with a relatively small bandwidth and a relatively low sampling rate or a scene of multi-stage cascaded HBFs, the filter has a very large processing delay, however, the flow prior to the read start time ① (e.g., channel coding, IFFT processing and the like) has a relatively small delay, the processing delay of the filter can be partially absorbed by adjusting the read start time ① backward, thereby further reducing the depth of the second buffer module.

At S16, reading buffered data based on a preset delay value, and then performing interface conversion and radio frequency (RF) processing on the read buffered data.

In the signal processing method of the present disclosure, a final target OFDM baseband signal is generated through the processing in the flows described above. Then, data is read from the second buffer module at a regular time based on a preset delay value, and finally transmitted out by an antenna after being subjected to the interface conversion and radio frequency (RF) processing.

The present disclosure further provides a signal processing apparatus 100, and as shown in FIG. 7, the apparatus 100 includes: a first buffer module 101 configured to convert a target signal under a preset standard into symbol data and buffering the symbol data in a buffer, the preset standard including at least one standard; a generation module 102 configured to generate a read address and a read enablement corresponding to the symbol data online in the buffer; a filtering module 103 configured to restore, based on the read address and the read enablement, the symbol data read from the buffer into two channels of read data in I-channel and Q-channel, and filter the two channels of read data correspondingly based on channel types of the two channels of read data in I-channel and Q-channel to obtain filtered data; an optimization module 104 configured to optimize the filtered data to obtain a target baseband signal; a second buffer module 105 configured to buffer the target baseband signal; and a processing module 106 configured to read buffered data based on a preset delay value, and then perform interface conversion and radio frequency (RF) processing on the read buffered data.

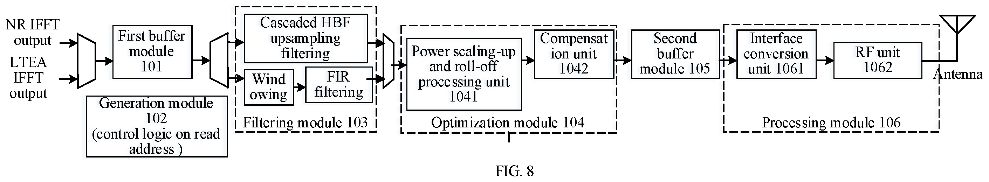

In some implementations of the present disclosure, as shown in FIG. 8, the generation module 102 can implement a logic control on the read address. The filtering module 103 may perform cascaded HBF upsampling filtering on the read data in the PRACH, and perform at least one of windowing or FIR filtering on a non-PRACH or a PRACH not to be subjected to upsampling.

In the signal processing apparatus 100 of the present disclosure, the optimization module 104 may include a power scaling-up and roll-off processing unit 1041, and may further include a compensation unit 1042. The power scaling-up and roll-off processing unit 1041 can implement scaling-up and roll-off processing on a power, and the compensation unit 1042 can compensate for a phase and a frequency of the filtered data.

In the signal processing apparatus 100 of the present disclosure, the processing module 106 may include an interface conversion unit 1061 and an RF unit 1062.

The solution provided in the present disclosure has at least following four advantages from 1 to 4,
1. According to the solution of the present disclosure, the OFDM modulated signal post-processing under the NR and LTEA standards is implemented in a fused manner, and the hardware structure of the entire signal processing apparatus remains to be consistent in different scheduling scenes, so that a unified control is facilitated, and after the fusion, the control logic complexity in each scene can be reduced. Furthermore, some of the processing flows support a bypass (direct pass) function, so that the multiplexing of the OFDM modulated signal post-processing under different standards can be maximized, thereby reducing an overall implementation area of the system and an overall area cost of a chip.
2. For the filtering process related to the OFDM modulated signal post-processing, scene-level multiplexing is performed by splitting a high-order filter into cascaded low-order filters by using a fixed clock frequency point, so that different orders for various standards can be flexibly supported. For example, both the HBF upsampling filtering and the FIR filtering in the solution of the present disclosure are implemented by multiplexing cascaded low-order filters. Moreover, multi-stage gating is adopted, fine clock gating is performed for each stage of filter to reduce the power consumption, and a cascaded HBF solution is properly used to replace a common FIR implementation based on scenes.
3. Operations including an addition of an OFDM cyclic prefix and an adjustment on the TA are performed online.
4. A smaller buffer module is used for timing output of the OFDM modulated signal subjected to the out-of-band suppression processing, and two buffer modules (i.e., the first buffer module and the second buffer module) are used to control timing reading and output of the OFDM modulated signal, so that a group delay of a transmission link under different standards in different scheduling scenes is guaranteed to be stable, and the receiving end is ensured to receive the corresponding signal in the fixed time window.

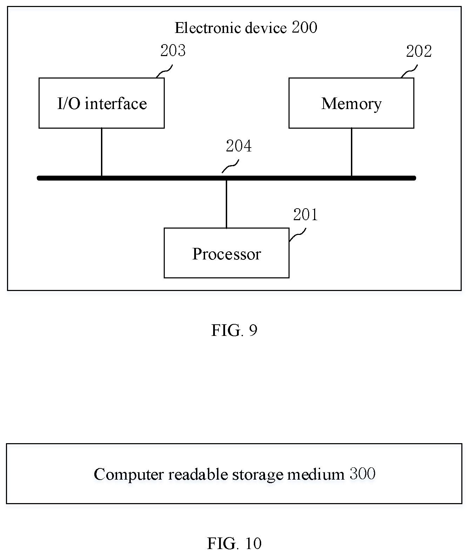

The present disclosure further provides an electronic device 200, and as shown in FIG. 9, the electronic device 200 includes: at least one processor 201; and a memory 202 having at least one computer program stored thereon, the at least one computer program, when executed by the at least one processor 201, causes the at least one processor 201 to implement the signal processing method described above.

In some implementations, the electronic device 200 further includes at least one input/output (I/O) interface 203 connected between the processor 201 and the memory 202 and configured to enable information interaction between the processor 201 and the memory 202.

The processor 201 is a device with a data processing capability, including but not limited to a central processing unit (CPU), or the like. The memory 202 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 203 is connected between the processor 201 and the memory 202 to enable information interaction between the processor 201 and the memory 202, and includes, but is not limited to, a data bus or the like.

In some implementations, the processor 201, the memory 202, and the I/O interface 203 are interconnected via a bus 204, and further connected to other components of a computing device.

The present disclosure further provides a computer readable storage medium 300, and as shown in FIG. 10, the computer readable storage medium 300 has a computer program stored thereon, the computer program, when executed by a processor, causes the processor to implement the signal processing method described above.

Those of ordinary skill in the art will appreciate that all or some of function modules/units disclosed above may be implemented as software firmware, hardware, and suitable combinations thereof.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a central processing unit (CPU), a digital signal processor or microprocessor, or implemented as hardware, or implemented as an integrated circuit, such as an application specific integrated circuit. Such software may be distributed on a computer readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or any other optical disk storage; a magnetic cassette, a magnetic tape, a magnetic disk memory or any other magnetic storage; or any other medium which can be used to store the desired information and can be accessed by a computer. Moreover, it is well known to those of ordinary skill in the art that a communication medium typically includes a computer readable instruction, a data structure, a program module, or other data in a modulated data signal, such as a carrier wave or other transport mechanism, and may include any information delivery medium.

The present disclosure has disclosed example implementations, and although specific terms are employed, they are used and should be interpreted merely in a generic and descriptive sense, not for purposes of limitation. In some instances, features, characteristics and /or elements described in connection with a particular implementation may be used alone, or may be used in combination with features, characteristics and/or elements described in connection with other implementations, unless expressly stated otherwise, as would be apparent to one skilled in the art. It will, therefore, be understood by those skilled in the art that various changes in form and details may be made without departing from the scope of the present disclosure as set forth in the appended claims.

## Claims

1. A signal processing method, comprising:
converting a target signal under a preset standard into symbol data and buffering the symbol data in a buffer, wherein the preset standard comprises at least one standard;
generating a read address and a read enablement corresponding to the symbol data online in the buffer;
restoring, based on the read address and the read enablement, the symbol data read from the buffer into two channels of read data in I-channel and Q-channel, and filtering the two channels of read data correspondingly based on channel types of the two channels of read data in I-channel and Q-channel to obtain filtered data;
optimizing the filtered data to obtain a target baseband signal;
buffering the target baseband signal; and
reading buffered data based on a preset delay value, and then performing interface conversion and radio frequency, RF, processing on the read buffered data.

2. The signal processing method according to claim 1, wherein the target signal comprises: an orthogonal frequency division multiplexing, OFDM, modulated signal; and
converting the target signal under the preset standard into symbol data and buffering the symbol data in the buffer comprises:
performing inverse fast Fourier transform, IFFT, processing on the OFDM modulated signal to obtain the symbol data; and
buffering symbol data under different standards in a same first buffer module in a time division multiplexing mode, and in a Ping-Pong buffering manner.

3. The signal processing method according to claim 1, wherein generating the read address and the read enablement corresponding to the symbol data online in the buffer comprises:
performing an addition of a cyclic prefix, CP, and an adjustment of timing advance, TA, on the symbol data online in the buffer; and
generating the read address and the read enablement corresponding to the symbol data subjected to the addition of the CP addition and the adjustment of the TA based on a control scene.

4. The signal processing method according to claim 3, wherein generating the read address and the read enablement corresponding to the symbol data subjected to the addition of the CP and the adjustment of the TA based on the control scene comprises:
acquiring scene parameters of the control scene, wherein the scene parameters comprise an address parameter, a time parameter, and a symbol length parameter;
generating a read start address based on the address parameter, generating a read start time based on the time parameter, and generating a symbol length threshold based on the symbol length parameter;
starting a preset symbol length counter based on the read start time and the symbol length threshold, and generating the read address based on the read start address and a count of the symbol length counter; and
generating the read enablement based on the read start time and the symbol length threshold.

5. The signal processing method according to claim 4, wherein
the address parameter comprises at least one of the standard, a sampling rate, a subcarrier interval, a channel type, a symbol position or an adjustment value for adjusting the TA;
the time parameter comprises at least one of the standard, the sampling rate, the subcarrier interval or the channel type; and
the symbol length parameter comprises at least one of the standard, the sampling rate, the subcarrier interval, the channel type, the symbol position, or the adjustment value for adjusting the TA.

6. The signal processing method according to claim 1, wherein filtering the two channels of read data correspondingly based on channel types of the two channels of read data in I-channel and Q-channel to obtain filtered data comprises:
in response to the channel type being a physical random access channel, PRACH, performing upsampling filtering on the read data by cascaded low-order filters, wherein each low-order filter is a filter having a filter order less than a preset order threshold; and
in response to the channel type being not the PRACH, performing at least one of windowing or finite impulse response, FIR, filtering on the read data.

7. The signal processing method according to claim 6, wherein performing upsampling filtering on the read data by the cascaded low-order filters comprises:
for a long code of the PRACH, performing IFFT based on an original number of sampling points in a PRACH sequence in the PRACH to obtain a transformed result; and
upsampling the transformed result by the cascaded low-order filters to a number of sampling points corresponding to the long code for filtering.

8. The signal processing method according to claim 6 or 7, wherein each low-order filter comprises a half band filter, HBF;
the cascaded low-order filters comprise at least one of following configurations:
each stage of low-order filter in the cascaded low-order filters adopts multiple phases; or
a clock of the cascaded low-order filters comprises two-stage gating, wherein the two-stage gating comprises global gating for the cascaded low-order filters, and gating for each stage of low-order filter, and a clock for each stage of low-order filter is started only upon the stage of low-order filter is enabled.

9. The signal processing method according to claim 6, further comprising:
before performing at least one of windowing or FIR filtering on the read data, setting each FIR unit in advance based on a number of multiply-accumulate operations within one sampling period at a highest data sampling rate;
cascading a plurality of FIR units to obtain an FIR filter with a configurable order; and
obtaining a target FIR filter with a corresponding order by controlling a number of enabled FIR units in the FIR filter, wherein the target FIR filter with any achievable order in the FIR filter is capable of being multiplexed.

10. The signal processing method according to claim 9, wherein a clock of each FIR filter comprises two-stage gating, wherein the two-stage gating comprises gating for the FIR filter, and gating for each FIR unit; and
a clock for a corresponding FIR unit is started only upon the FIR unit is enabled.

11. The signal processing method according to claim 9 or 10, wherein performing FIR filtering on the read data comprises:
determining a filter order for the read data; and
starting a target FIR filter with a corresponding order in the FIR filter based on the determined filter order to filter the read data.

12. The signal processing method according to claim 1, wherein the optimizing comprises at least one of:
selectively performing power scaling-up and roll-off processing on successive filtered data; or
compensating for a phase and a frequency of the filtered data.

13. A signal processing apparatus, comprising:
a first buffer module configured to convert a target signal under a preset standard into symbol data and buffering the symbol data in a buffer, wherein the preset standard comprises at least one standard;
a generation module configured to generate a read address and a read enablement corresponding to the symbol data online in the buffer;
a filtering module configured to restore, based on the read address and the read enablement, the symbol data read from the buffer into two channels of read data in I-channel and Q-channel, and filter the two channels of read data correspondingly based on channel types of the two channels of read data in I-channel and Q-channel to obtain filtered data;
an optimization module configured to optimize the filtered data to obtain a target baseband signal;
a second buffer module configured to buffer the target baseband signal; and
a processing module configured to read buffered data based on a preset delay value, and then perform interface conversion and radio frequency, RF, processing on the read buffered data.

14. An electronic device, comprising:
at least one processor; and
a memory having at least one computer program stored thereon, the at least one computer program, when executed by the at least one processor, causes the at least one processor to implement the signal processing method according to any one of claims 1 to 12.

15. A computer readable storage medium having a computer program stored thereon, the computer program, when executed by a processor, causes the processor to implement the signal processing method according to any one of claims 1 to 12.
